# EUROPÄISCHE PATENTSCHRIFT

(11) **EP 0 558 899 B1**
(45) Veröffentlichungstag und Bekanntmachung des Hinweises auf die Patenterteilung: **13.03.1996**
(21) Anmeldenummer: 93100709.0
(22) Anmeldetag: 19.01.1993
(51) Int. Cl.: F22D 1/36, F23L 15/00

(54) **Anordnung zur Nutzung der im Abgas eines kohlegefeuerten Kessels enthaltenen Wärme**
System for using the heat of the exhaust gases from a coal-fired boiler
Installation pour utiliser la chaleur des gaz sortant d'une chaudière chauffée au charbon

(30) Priorität: 06.03.1992 DE 4207082; 13.04.1992 DE 4212336
(43) Veröffentlichungstag der Anmeldung: 08.09.1993
(73) Patentinhaber: GEA LUFTKÜHLER GmbH, D-44809 Bochum (DE)
(72) Erfinder: Suhr, Ludwig, W-4300 Essen (DE); Paikert, Paul, W-5810 Witten (DE)
(74) Vertreter: Bockermann, Rolf, Dipl.-Ing.

(56) Entgegenhaltungen:
- DE-B- 1 156 929
- DE-C- 976 167
- GB-A- 841 040
- GB-A- 2 138 555
- US-A- 2 594 471

## Beschreibung

Die Erfindung betrifft eine Anordnung zur Nutzung der im Abgas eines Bestandteil eines Kraftwerks bildenden kohlegefeuerten Kessels enthaltenen Wärme für die Vorwärmung des Kesselspeisewassers und für die Primärluftvorwärmung gemäß den Merkmalen im Oberbegriff des Patentanspruchs 1 (siehe die DE-C-976 167).

Eine ähnliche Anordnung zählt durch den Prospekt der GEA Luftkühler GmbH, Dorstener Straße 18-29, 4690 Herne 2 "Kraftwerk: Rauchgaswärme für die Vorheizung von Luft und Kondensat" zum Stand der Technik. Bei dieser Anordnung wird das im geschlossenen Kreislauf strömende Wärmeträgermedium der Wärmeverschiebungseinheit über einen von der entsprechend der Umgebungsluft temperierten Primärluft beaufschlagten Wärmeaustauscher sowie über einen Wärmeaustauscher geführt, der von einem weiteren, ebenfalls im geschlossenen Kreislauf srömenden Wärmeträgermedium beaufschlagt wird, das von dem aus der Wärmeübertragungsanlage tretenden Abgas temperiert wird. Dieses weitere Wärmeträgermedium strömt außerdem über einen Wärmeaustauscher, welcher andererseits von dem Kesselspeisewasser beaufschlagt wird.

Obwohl das aus einem mit Braunkohle befeuerten Kessel tretende Abgas eine Temperatur von etwa 290 °C hat, steht durch den Wärmetausch in der rotierenden Wärmeübertragungsanlage an der Wärmeverschiebungseinheit ein Abgas mit einer Temperatur von nur noch etwa 180 °C zur Verfügung. Mithin kann unter Berücksichtigung der Wärmeverluste einerseits in der Wärmeverschiebungseinheit und andererseits in dem Kreislauf des Wärmeträgermediums zwischen der Wärmeverschiebungseinheit und dem Kesselspeisewasser dieses maximal bis auf etwa 160 °C temperiert werden. Demzufolge muß im Kessel eine erhebliche Brennstoffmenge verfeuert werden, um das auf etwa 160 °C temperierte Kesselspeisewasser weiter zu erhitzen, dann zu verdampfen und den Dampf anschließend einer Turbine zur Erzeugung von elektrischer Energie zuzuführen.

Der Erfindung liegt ausgehend von der im Oberbegriff des Patentanspruchs 1 beschriebenen Anordnung die Aufgabe zugrunde, diese im Hinblick auf eine deutliche Steigerung des Kraftwerkswirkungsgrads zu verbessern.

Die Lösung dieser Aufgabe besteht nach der Erfindung in den im Patentanspruch 1 aufgeführten Merkmalen.

Die Erfindung basiert u.a. auf den technisch bedingten Sachverhalt, daß den mit insbesondere Braunkohle befeuerten Kesseln üblicherweise nur etwa 75 % der für die Verbrennung der Braunkohle erforderlichen Verbrennungsluft über die Wärmeübertragungsanlage zugeführt wird. Die restlichen 25 % der Verbrennungsluft gelangen über andere Wege, zum größten Teil durch Leckagen in den Kessel. Auf der anderen Seite wird jedoch bislang der gesamte Massenstrom des den Kessel verlassenden Abgases über die Wärmeübertragungsanlage geführt.

Die Erfindung ist allerdings nicht auf Braunkohlenanlagen beschränkt. Auch andere Brennstoffe zur Befeuerung des Kessels sind denkbar.

Erfindungsgemäß wird jetzt nicht mehr der gesamte Abgasstrom über die Wärmeübertragungsanlage geleitet, sondern nur noch diejenige Abgasmenge, die bei einer Temperatursenkung des Abgases von etwa 290 °C auf 180 °C für die Erwärmung der Verbrennungsluft in der Wärmeverschiebungseinheit von etwa 110 °C auf etwa 270 °C erforderlich ist. Hierbei handelt es sich um etwa zwei Drittel der gesamten Abgasmenge. Die restliche Abgasmenge, im praktischen Fall also etwa ein Drittel des gesamten Abgasstroms, wird nunmehr im Bypass um die Wärmeübertragungsanlage sowie über einen in den Bypass integrierten Wärmeaustauscher und/oder über einen im Bypass vorgesehenen Dampferzeuger geführt und hierbei ebenfalls auf etwa 180 °C gekühlt.

Das in dem Wärmeaustauscher strömende Kesselspeisewasser wird dabei von etwa 160 °C auf ca. 260 °C erhitzt. Demzufolge kann jetzt dem Kessel ein sehr hoch temperiertes Kesselspeisewasser zur Verfügung gestellt werden.

Wird statt des Wärmeaustauschers oder parallel zum Wärmeaustauscher ein Dampferzeuger in den Bypass eingegliedert, so kann die im Abgas enthaltene Wärme zur Gewinnung von Dampf und damit zur Erzeugung von elektrischem Strom genutzt werden.

Die Erfindung schafft mithin eine optimale Ausbeutung der über den Bypass und den darin integrierten Wärmeaustauscher zusätzlich ausgekoppelten Wärme. Die so an das Kesselspeisewasser abgegebene Wärme läßt sich mit einem höheren Nutzungsgrad als bei den bisherigen Kesselspeisewassertemperaturen in elektrischen Strom umwandeln.

Wird die Abwärme zur Dampferzeugung genutzt und über eine zusätzliche Dampfturbine mittels dieses Dampfs elektrischer Strom erzeugt, so kann die Erzeugung an elektrischem Strom deutlich über die in der Hauptturbine gewonnene Menge an elektrischem Strom gesteigert werden.

Auf diese Weise wird direkt die der Temperaturerhöhung bzw. die der Dampferzeugung entsprechende Wärmemenge bzw. die entsprechende Brennstoffmenge eingespart. Der Kraftwerkswirkungsgrad kann folglich deutlich gesteigert werden.

Eine vorteilhafte Ausführungsform der Erfindung, bei welcher das die Wärmeverschiebungseinheit verlassende Abgas über eine Rauchgasentschwefelungsanlage in einen Kamin geführt ist, wird in den Merkmalen des Patentanspruchs 2 gesehen. Auf diese Weise kann die in dem aus der Wärmeübertragungsanlage tretenden Abgas noch enthaltene Wärme zusätzlich dazu genutzt werden, um das die Rauchgasentschwefelungsanlage verlassende Abgas von etwa 50 °C auf eine Temperatur von etwa 85 °C zu bringen. Dadurch kann den insbesondere aus Gründen des Umweltschutzes geforderten Temperaturen der Emissionen im Kamin Rechnung getragen werden.

Die Erfindung ist nachfolgend anhand von in den Zeichnungen dargestellten Ausführungsbeispielen näher erläutert. Es zeigen:
- Figuren 1 und 2: jeweils eine Anordnung zur Nutzung der im Abgas eines kohlegefeuerten Kessels enthaltenen Wärme für die Vorwärmung des Kesselspeisewassers und für die Primärluftvorwärmung und
- Figur 3: eine Anordnung zur Erzeugung von Dampf aus der Wärme im Abgas.

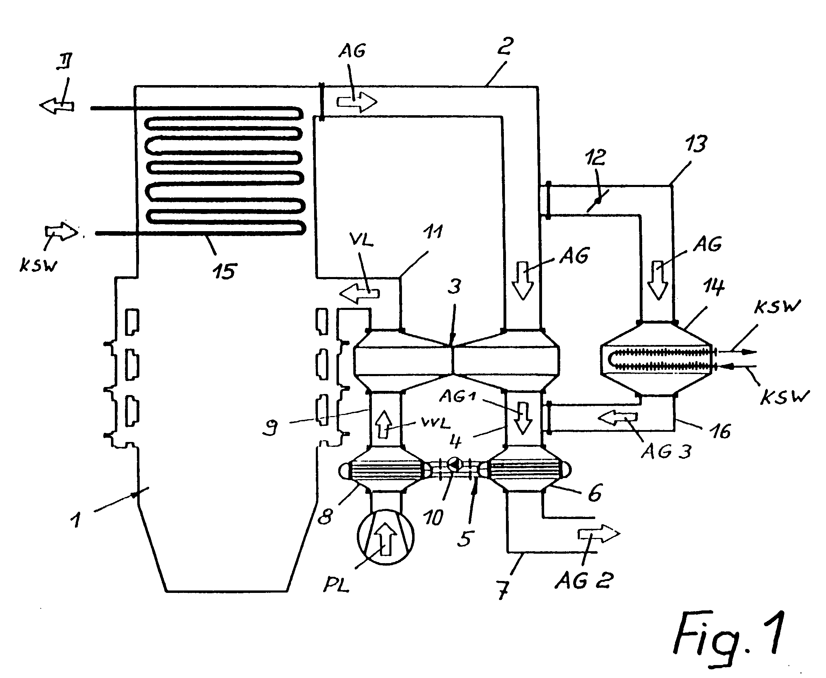

Mit 1 ist in der Figur 1 ein mit Braunkohle befeuerter Kessel als Bestandteil eines elektrische Energie erzeugenden, ansonsten nicht näher veranschaulichten Kraftwerks bezeichnet.

Das durch die Verfeuerung von Braunkohle entstehende Abgas AG wird über eine Leitung 2 einer rotierenden Wärmeübertragungsanlage 3, und zwar einem sogenannten Ljungström-Wärmeaustauscher, kurz LUVO genannt, zugeführt. Das aus dem Kessel 1 tretende Abgas AG hat eine Temperatur von etwa 290 °C.

Im LUVO 3 wird dem Abgas AG Wärme entzogen, so daß das den LUVO 3 über die Leitung 4 verlassende Abgas AG1 eine Temperatur von etwa 180 °C aufweist.

Anschließend wird das Abgas AG1 über einen Bestandteil einer Wärmeverschiebungseinheit 5 bildenden Wärmeaustauscher 6 geführt, in welchem das Abgas AG1 weitere Wärme abgibt, so daß das den Wärmeaustauscher 6 über die Leitung 7 verlassende Abgas AG2 eine Temperatur von etwa 110 °C besitzt. Mit dieser Temperatur kann das Abgas AG2 beispielsweise einer Rauchgasentschwefelungsanlage zugeführt werden.

Die im Wärmeaustauscher 6 der Wärmeverschiebungseinheit 5 dem Abgas AG1 entzogene Wärme wird mittels eines in der Wärmeverschiebungseinheit 5 im geschlossenen Kreislauf strömenden Wärmeträgermediums einem Wärmeaustauscher 8 zugeführt, der in eine Leitung 9 eingegliedert ist, in welcher Primärluft PL mit einer der Umgebungsluft entsprechenden Temperatur von etwa 20 °C ansteht. Das Wärmeträgermedium in der Wärmeverschiebungseinheit 5 wird durch eine Pumpe 10 im Kreislauf gehalten.

Durch die dem Abgas AG1 entzogene Wärme wird die Primärluft PL auf eine Temperatur von etwa 110 °C erhitzt. Diese vorgewärmte Verbrennungsluft VVL wird anschließend über den LUVO 3 geführt. Dadurch ist der LUVO 3 vor Korrosionen geschützt. Im LUVO 3 erlangt die vorgewärmte Verbrennungsluft VVL eine weitere Temperaturerhöhung mittels der dem Abgas AG im LUVO 3 entzogenen Wärme.

Dem Kessel 1 wird dann über eine Leitung 11 Verbrennungsluft VL mit einer Temperatur von etwa 270 °C zugeführt.

Die zum LUVO 3 führende Abgasleitung 2 und die Abgasleitung 4 zwischen dem LUVO 3 und der Wärmeverschiebungseinheit 5 sind durch einen mittels Klappe 12 regelbaren Bypass 13 verbunden. In den Bypass 13 ist ein Wärmeaustauscher 14 integriert, der von Kesselspeisewasser KSW durchströmt ist.

Von der aus dem Kessel 1 tretenden Abgasmenge werden etwa zwei Drittel über den LUVO 3 und etwa ein Drittel über den Bypass 13 geführt. Die von dem Abgas AG an den Wärmeaustauscher 14 im Bypass 13 abgegebene Wärme wird von dem Kesselspeisewasser KSW aufgenommen und dieses von etwa 160 °C auf etwa 260 °C gebracht.

Das den Wärmeaustauscher 14 verlassende Kesselspeisewasser KSW wird anschließend in bekannter und nicht näher dargestellter Weise temperaturmäßig noch höher gespannt und letztlich einem Rohrschlangensystem 15 im Kessel 1 zugeleitet. In diesem verdampft das Kesselspeisewasser KSW. Der Dampf D wird dann zu einer nicht näher dargestellten Turbine zwecks Erzeugung elektrischer Energie geleitet.

Das den Wärmeaustauscher 14 im Bypass 13 verlassende Abgas AG3 hat eine Temperatur von etwa 180 °C. Es wird über einen Leitungsabschnitt 16 des Bypasses in die Leitung 4 zwischen dem LUVO 3 und der Wärmeverschiebungseinheit 5 gefördert und hier mit dem den LUVO 3 verlassenden Abgas AG1 vermischt.

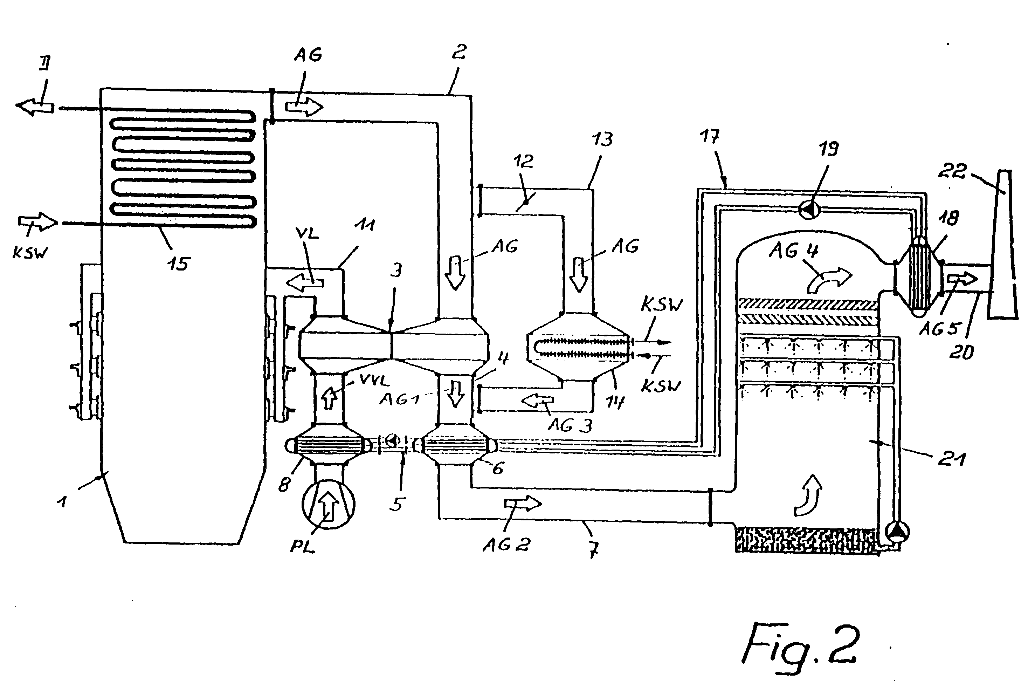

Die Ausführungsform der Figur 2 stimmt hinsichtlich der Bauteile Kessel 1, LUVO 3, Bypass 13 mit Wärmeaustauscher 14 und Wärmeverschiebungseinheit 5 mit der Ausführungsform der Figur 1 überein. Eine nochmalige Beschreibung dieser Bauteile ist mithin entbehrlich.

Es ist ferner zu sehen, daß die Wärmeverschiebungseinheit 5 über ein geschlossenes Kreislaufsystem 17 an einen Wärmeaustauscher 18 angeschlossen ist. In dem Kreislaufsystem 17 strömt ein Wärmeträgermedium, das durch eine Pumpe 19 bewegt wird.

Der Wärmeaustauscher 18 befindet sich in einer Leitung 20 zwischen einer nicht näher beschriebenen Rauchgasentschwefelungsanlage 21 und einem nur schematisch veranschaulichten Kamin 22.

Das die Wärmeverschiebungseinheit 5 über die Leitung 7 mit einer Temperatur von etwa 110 °C verlassende Abgas AG2 wird der Rauchgasentschwefelungsanlage 21 zugeführt, in dieser gereinigt sowie auf etwa 50 °C heruntergekühlt. Das die Rauchgasentschwefelungsanlage 21 verlassende Abgas AG4 wird dann im Wärmeaustauscher 18 wieder erwärmt und auf eine Temperatur von etwa 85 °C gebracht, mit der das Abgas AG5 dann unter Beachtung der vorgeschriebenen Emissionen in den Kamin 22 überführt wird.

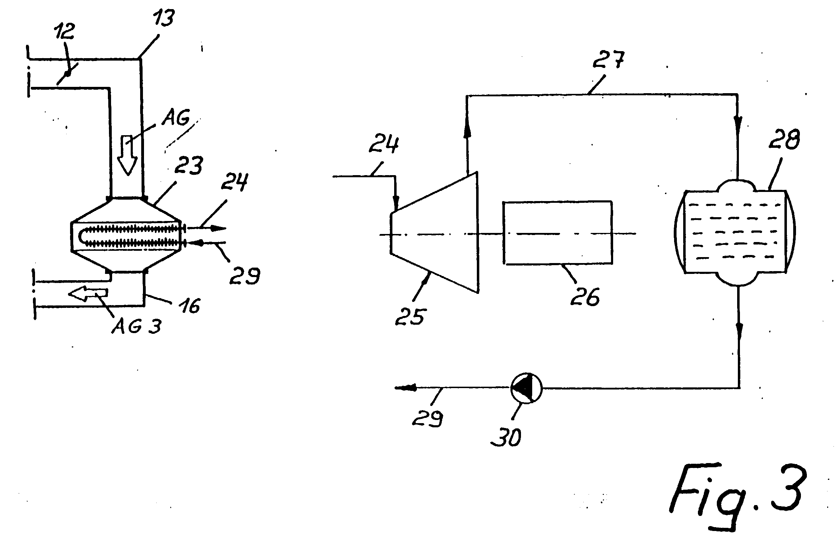

Bei der Anordnung gemäß Figur 3 wird die im Abgas AG enthaltene Wärme genutzt, indem statt des Wärmeaustauschers 14 der Figur 1 ein Dampferzeuger 23 in den Bypass 13 eingegliedert ist. Der Dampferzeuger 23 steht über eine Dampfleitung 24 mit einer Dampfturbine 25 in Verbindung. Die Dampfturbine 25 dient der Erzeugung von elektrischem Strom. Dazu ist sie mit einem Generatur 26 gekoppelt.

Aus der Dampfturbine 25 tritt über die Leitung 27 niedergespannter Dampf in einen wasser- und/oder luftgekühlten Kondensator 28 ein. Im Kondensator 28 wird der niedergespannte Dampf kondensiert und tritt über die Leitung 29 in den Dampferzeuger 23 ein.

Zwischen dem Kondensator 28 und dem Dampferzeuger 23 ist eine Druckerhöhungspumpe 30 in die Leitung 29 eingegliedert.

## Patentansprüche

1. Anordnung zur Nutzung der im Abgas (AG) eines Bestandteil eines Kraftwerks bildenden kohlegefeuerten Kessels (1) enthaltenen Wärme, welche eine einerseits von dem Abgas (AG) aus dem Kessel (1) und andererseits von vorgewärmter Verbrennungsluft (VVL) beaufschlagbare rotierende Wärmeübertragungsanlage (3) sowie einen Wärmeübertrager (5) aufweist, der einerseits von dem die Wärmeübertragungsanlage (3) verlassenden gekühlten Abgas (AG1) und von dem aus einer Wärmetauschvorrichtung (14, 23) tretenden gekühlten Abgas (AG3) und andererseits von Primärluft (PL) beaufschlagbar ist, wobei die Wärmetauschvorrichtung (14, 23) in einen die Wärmeübertragungsanlage (3) überbrückenden Bypass (13) eingegliedert ist, der die zur Wärmeübertragungsanlage (3) führende Abgasleitung (2) und die gasleitende Verbindung (4) zwischen der Wärmeübertragungsanlage (3) und dem Wärmeübertrager (5) miteinander koppelt, **gekennzeichnet durch** folgende Merkmale:
- der Wärmeübertrager ist als zur Wärmeübertragungsanlage (3) parallel geschaltete Wärmeverschiebungseinheit (5) mit zwei Wärmeaustauschern (6, 8) ausgebildet, die durch ein im geschlossenen Kreislauf mit darin integrierter Pumpe (10) strömendes Wärmeträgermedium verbunden sind,
- die Wärmetauschvorrichtung im Bypass (13) ist als vom Kesselspeisewasser (KSW) durchströmter Wärmeaustauscher (14) und/oder als Dampferzeuger (23) ausgebildet.

2. Anordnung nach Patentanspruch 1, bei welcher das die Wärmeverschiebungseinheit (5) verlassende Abgas (AG2) über eine Rauchgasentschwefelungsanlage (21) in einen Kamin (22) geführt ist, **dadurch gekennzeichnet**, daß die Wärmeverschiebungseinheit (5) mit einem in eine Abgasleitung (20) zwischen der Rauchgasentschwefelungsanlage (21) und dem Kamin (22) eingegliederten Wärmeaustauscher (18) verbunden ist.

## Claims

1. An arrangement for using the heat contained in the waste gas (AG) from a coal-fired boiler (1) forming a component of a power station, the arrangement comprising a rotating heat transfer system (3) acted upon on the one hand by the waste gas (AG) from the boiler (1) and on the other hand by preheated air for combustion (VVL) and also comprising a heat transfer means (5) acted upon on the one hand by the cooled waste gas (AG1) leaving the heat transfer system (3) and the cooled waste gas (AG3) coming from a heat exchange device (14, 23) and on the other hand by primary air (PL), the heat exchange device (14, 23) being incorporated in a bypass (13) bridging the heat transfer system (3) and coupling the waste-gas line (2) leading to the heat transfer system (3) to the gas-carrying connection (4) between the heat transfer system (3) and the heat transfer means (5), characterised by the following features:
- the heat transfer means is constructed in the form of a heat displacement unit (5) connected in parallel with the heat transfer system (3) and comprising two heat exchangers (6, 8) connected by a heat transfer medium flowing in a closed circuit incorporating a pump (10), and
- the heat exchange device in the bypass (13) is in the form of a steam generator (23) and/or a heat exchanger (14) through which the boiler feed water (KSW) flows.

2. An arrangement according to claim 1, wherein the waste gas (AG2) leaving the heat displacement unit (5) is conveyed through a flue gas desulphuration plant (21) to a chimney (22), characterised in that the heat displacement unit (5) is connected to a heat exchanger (18) incorporated in a waste gas line (20) between the flue gas desulphuration plant (21) and the chimney (22).

## Revendications

1. Installation pour l'utilisation de la chaleur contenue dans les gaz d'échappement (AG) d'une chaudière à charbon (1) faisant partie d'une centrale thermique, qui comporte une installation de transfert thermique (3) en rotation alimentée d'une part par les gaz d'échappement (AG) de la chaudière (1) et d'autre part par l'air de combustion préchauffé (VVL) ainsi qu'un échangeur de chaleur (5), qui est alimenté d'une part par les gaz d'échappement refroidis (AG1) quittant l'installation de transfert de chaleur (3) et par les gaz d'échappement refroidis (AG3) sortant d'un dispositif d'échange de chaleur (14, 23) et d'autre part, par l'air primaire (PL), le dispositif d'échange de chaleur (14, 23) étant incorporé dans un by-pass (13) dérivant l'installation de transfert de chaleur (3), by-pass qui réunit la conduite des gaz d'échappement (2) menant à l'installation de transfert de chaleur (3) et la liaison conductrice de gaz (4) entre l'installation de transfert de chaleur (3) et l'échangeur de chaleur (5), caractérisée par les particularités suivantes :
- l'échangeur de chaleur est réalisé comme unité de déplacement de chaleur (5) monté parallèlement à l'installation de transfert de chaleur (3) avec deux échangeurs de chaleur (6, 8), qui sont reliés par un agent caloporteur s'écoulant en circuit fermé avec la pompe intégrée (10),
- le dispositif échangeur de chaleur dans le by-pass (13) est réalisé comme échangeur de chaleur (14) traversé par l'eau d'alimentation de la chaudière (KSW) et/ou comme générateur de vapeur (23).

2. Installation selon la revendication 1, dans laquelle le gaz d'échappement (AG2) quittant l'unité de déplacement de chaleur (5) est amené dans une cheminée (22) en passant par une installation de désulfuration des gaz de fumée (21), caractérisée en ce que l'unité de déplacement de chaleur (5) est raccordée à un échangeur de chaleur (18) incorporé dans une conduite des gaz d'échappement (20) entre l'installation de désulfuration des gaz de fumée (21) et la cheminée (22).
